# EUROPEAN PATENT APPLICATION

(11) **EP 3 023 715 A1**
(43) Date of publication of application: **25.05.2016**
(21) Application number: 15195058.1
(22) Date of filing: 17.11.2015
(51) Int. Cl.: F25B 41/06

(54) **EXPANSION APPARATUS AND REFRIGERANT CYCLE OF VEHICLE AIR CONDITIONER USING THE SAME**

(30) Priority: 18.11.2014 JP 2014233456
(71) Applicant: Valeo Japan Co., Ltd., Saitama 360-0193 (JP)
(72) Inventor: KAJIZUKA, Hirotaka, SAITAMA, 360-0193 (JP)
(74) Representative: Metz, Gaëlle

(57) **Abstract**

To provide an expansion apparatus capable of reliably producing an effect of reducing refrigerant flow noise and a refrigerant cycle of a vehicle air conditioner using the expansion apparatus. In an expansion apparatus 1 in which a valve body 41 of a refrigerant flow rate adjustment mechanism 40 is accommodated in a valve chest 5 of a main body 2 to which a refrigerant is led, a first narrow portion 4 is provided between a lead-in passage 3 and the valve chest 5, and a second narrow portion 6 having a flow passage area smaller than that of the first narrow portion 4 is provided between the valve chest 5 and a lead-out passage 7, the valve chest 5 is formed so as to have a space S around the valve body 41 and the first narrow portion 4 is formed so as to face the space S around the valve body 41, so that the refrigerant led to the valve chest 5 from the first narrow portion 4 flows toward the second narrow portion 6 through the space S around the valve body 41 without passing through a coil spring 43.

## Description

### BACKGROUND OF THE INVENTION

### 1. Field of the Invention

The present invention relates to an expansion apparatus having an improved structure for reducing refrigerant flow noise caused when a refrigerant flows through a narrow portion provided between a valve chest and a lead-out passage and to a refrigerant cycle of a vehicle air conditioner including this expansion apparatus.

### 2. Description of the Related Art

If bubbles are mixed into a liquid refrigerant led to an expansion apparatus via a condenser after startup of a refrigerant cycle, the bubbles in the refrigerant cause refrigerant flow noise when passing through an orifice provided between a valve chest and a lead-out passage.

For example, as the refrigerant cycle proposed in JP-A-8-159616, there is a disclosed invention that reduces refrigerant flow noise caused when the refrigerant passes through the orifice by eliminating or breaking up bubbles in the refrigerant before the refrigerant passes through the orifice.

In the refrigerant cycle proposed in Patent Literature 1, an expansion apparatus and a block directly connected to the expansion apparatus are provided, a communication passage communicating with the upstream side of a lead-in passage of the expansion apparatus is disposed in the block, a connection portion to be inserted into the upstream side of the lead-in passage is formed so as to project at an open end of the communication passage, and a narrow portion is provided in the connection portion. This enables bubbles in the refrigerant to be eliminated or broken up before the refrigerant is led to the valve chest of the expansion apparatus.

Patent Literature 1 : JP-A-8-159616

However, in the refrigerant cycle in Patent Literature 1, the narrow portion is provided so that its opening faces an elastic member disposed in the valve chest, so the refrigerant led to the valve chest from the narrow portion flows into the orifice in a turbulent flow state. Since bubbles are newly generated or grown in the refrigerant in the turbulent flow state, the refrigerant cycle may not sufficiently produce an effect of reducing refrigerant flow noise.

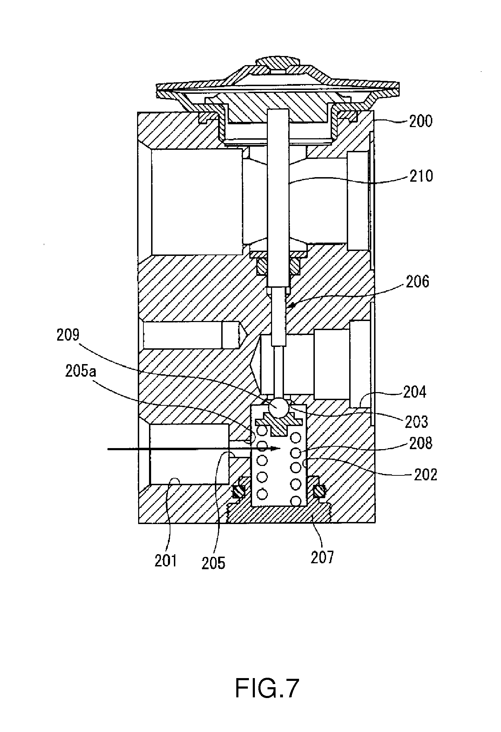

Such a problem also occurs in a conventional expansion apparatus 200 illustrated in Fig. 7 in the present application. The expansion apparatus 200 includes a lead-in passage 201, a valve chest 202, a narrow portion 205 provided between the lead-in passage 201 and the valve chest 202, a lead-out passage 204, an orifice 203 provided between the valve chest 202 and the lead-out passage 204, a valve body 209 opening and closing the orifice 203, and an elastic member 208 used to adjust the valve opening of the orifice 203 by the valve body 209, in which a narrow portion opening 205a is provided so as to face the elastic member 208. The refrigerant led to the valve chest 202 from the narrow portion opening 205a is put in a turbulent flow state by the elastic member 208 and the refrigerant passes through the orifice 203 in a state in which bubbles are newly generated or grown in the refrigerant. Therefore, the expansion apparatus 200 may not sufficiently produce an effect of reducing refrigerant flow noise.

### SUMMARY OF THE INVENTION

Accordingly, an object of the invention is to provide an expansion apparatus that has a narrow portion between a lead-in passage and a valve chest, prevents bubbles from being newly generated or grown by causing a refrigerant having passed through the narrow portion to reach an orifice without being put in a turbulent flow state, and reliably produces an effect of reducing refrigerant flow noise and to provide a vehicle refrigerant cycle including the expansion apparatus.

An expansion apparatus according to the present invention includes a main body including a valve chest to which a refrigerant is led, a lead-in passage through which the refrigerant is led to the valve chest, a lead-out passage through which the refrigerant led to the valve chest is led out, a first narrow portion formed between the lead-in passage and the valve chest, and a second narrow portion formed between the valve chest and the lead-out passage, the second narrow portion having a flow passage area smaller than that of the first narrow portion, and a refrigerant flow rate adjustment mechanism including a valve body disposed in the valve chest, a closing device biasing the valve body disposed in the valve chest in a direction in which the second narrow portion is closed, and an opening device capable of biasing the valve body in a direction in which the second narrow portion is opened, in which the valve chest has a space around the valve body and the first narrow portion is formed so as to face the space around the valve body (first aspect).

Therefore, since the valve chest has the space around the valve body and the first narrow portion is formed so as to face the space around the valve body, the refrigerant having passed though the first narrow portion can smoothly flow toward the second narrow portion via the space around the valve body, thereby preventing the refrigerant from passing through the closing device as in the related art. Accordingly, the generation of a turbulent flow is prevented in a flow passage of the refrigerant extending from the first narrow portion through the valve chest to the second narrow portion, thereby suppressing the generation and growth of bubbles.

In the expansion apparatus according to the invention, the first narrow portion may be formed so that the refrigerant flows toward the valve body (second aspect).

Therefore, since the refrigerant flows from the first narrow portion to the valve body, the ratio of the liquid refrigerant flowing toward the closing device can be further reduced, thereby reliably suppressing the occurrence of a turbulent flow in the flow passage of the refrigerant flowing from the first narrow portion to the second narrow portion through the valve chest.

In the expansion apparatus according to the invention, the closing device includes an elastic member biasing the valve body and a cover part covering a periphery of a side of the elastic member (third aspect).

Therefore, even when a part of the liquid refrigerant fed from the first narrow portion to the valve chest flows toward the elastic member of the closing device, since the periphery of the elastic member is covered with the cover part, the liquid refrigerant is prevented from passing through the elastic member. Accordingly, the refrigerant led to the valve chest can be reliably prevented from passing through the elastic member and causing a turbulent flow.

In the expansion apparatus according to the invention, an outer shape of the cover part may become smaller toward the valve body (fourth aspect).

Therefore, since the outer shape of the cover part becomes smaller toward the valve body, the space of the valve chest becomes larger toward the valve body and the liquid refrigerant led to the valve chest is guided so as to flow toward the valve body. Accordingly, the ratio of the liquid refrigerant flowing toward the closing device to the liquid refrigerant led to the valve chest.

A refrigerant cycle of a vehicle air conditioner according to the invention includes a compressor compressing a refrigerant, a condenser condensing the refrigerant compressed by the compressor, the expansion apparatus according to any one of the first to the fourth aspects expanding the refrigerant condensed by the condenser, and an evaporator evaporating the refrigerant expanded by the expansion apparatus, in which the compressor, the condenser, the expansion apparatus, and the evaporator are connected by piping (fifth aspect). Refrigerant flow noise caused when the refrigerant passes through the second narrow portion of the expansion apparatus can be reduced reliably by using the expansion apparatus having the structure according to the invention in the refrigerant cycle.

In the expansion apparatus according to the invention, since the valve chest has the space around the valve body and the first narrow portion is formed so as to face the space around the valve body, the refrigerant having passed through the first narrow portion can smoothly flow to the second narrow portion through the space around the valve body, thereby preventing the refrigerant from passing through the elastic member of the closing device as in the related art.

This prevents a turbulent flow caused when the liquid refrigerant led to the valve chest passes through the elastic member and suppresses the generation and growth of bubbles, thereby reducing flow noise caused when the refrigerant passes through the second narrow portion.

Since the refrigerant flows from the first narrow portion toward the valve body in the expansion apparatus according to the second aspect, it is possible to further reduce the ratio of the liquid refrigerant flowing toward the elastic member of the closing device.

Accordingly, it is possible to reliably suppress a turbulent flow caused when the liquid refrigerant led to the valve chest passes through the elastic member, further reducing flow noise caused when the refrigerant passes through the second narrow portion.

In the expansion apparatus according to the third aspect, even when a part of the liquid refrigerant fed from the first narrow portion to the valve chest flows toward the elastic member, since the elastic member is covered with the cover part, the liquid refrigerant is prevented from passing through the elastic member.

Accordingly, it is possible to reliably suppress a turbulent flow caused when the liquid refrigerant led to the valve chest passes through the elastic member, further reducing flow noise caused when the refrigerant passes through the second narrow portion.

In the expansion apparatus according to the fourth aspect, since the outer shape of the cover part becomes smaller toward the valve body, the space of the valve chest becomes larger toward the valve body and the liquid refrigerant led to the valve chest is guided so as to flow toward the valve body.

Accordingly, the ratio of the liquid refrigerant flowing toward the closing device to the liquid refrigerant led to the valve chest is reduced and a turbulent flow is reliably suppressed, further reducing flow noise caused when the refrigerant passes through the second narrow portion.

In the refrigerant cycle of the vehicle air conditioner according to the fifth aspect, the expansion apparatus having the structure according to the invention is used as the expansion apparatus of the refrigerant cycle to reliably reduce refrigerant flow noise caused when the refrigerant passes through the second narrow portion of the expansion apparatus.

### BRIEF DESCRIPTION OF THE DRAWINGS

Fig. 1 is a sectional view illustrating an expansion apparatus according to the present invention and a structural diagram schematically illustrating a refrigerant cycle of a vehicle air conditioner using the expansion apparatus.
Fig. 2 illustrates the structure of a main body of the expansion apparatus, Fig. 2A is a front view illustrating the main body, and Fig. 2B is a cross sectional view illustrating the main body.
Fig. 3 illustrates a part of the main body and a closing device accommodated in the main body.
Fig. 4 an enlarged main part cross sectional view illustrating how a refrigerant having flown to the expansion apparatus passes through a first narrow portion and proceeds to a second narrow portion.
Fig. 5 is a table illustrating auditory evaluation in the expansion apparatus.
Fig. 6 illustrates a modification of the closing device, Fig. 6A is an overall view of the closing device, and Fig. 6B is a cross sectional view illustrating the main body accommodating the closing device.
Fig. 7 is a cross sectional view of the expansion apparatus illustrated as the related art in the table in Fig. 5 illustrating the auditory evaluation.

### DESCRIPTION OF EMBODIMENTS

An expansion apparatus 1 according the present invention and a refrigerant cycle 100 using the expansion apparatus 1 will be described with reference to the drawings.

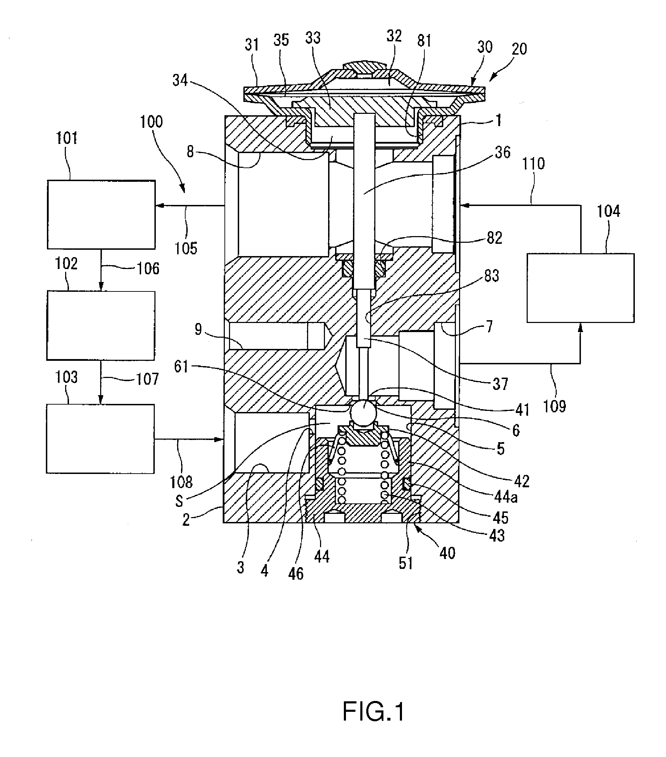

The refrigerant cycle 100 is used for a vehicle air conditioner and configured by connecting, as illustrated in Fig. 1, a compressor 101 compressing a refrigerant, a condenser 102 condensing the refrigerant compressed by the compressor 101, a liquid tank 103 separating the refrigerant condensed by the condenser 102 into gas and liquid, the expansion apparatus 1 according to the invention decompressing and expanding the liquid refrigerant separated by the liquid tank 103, and an evaporator 104 evaporating the refrigerant decompressed and expanded by the expansion apparatus 1 via pipes 105 to 110 as appropriate. However, the liquid tank 103 may be directly connected to the condenser 102 without using the pipe 107. In addition, the expansion apparatus 1 may be directly connected to the evaporator 104 without using the pipe 109 or the pipe 110. The compressor 101, the condenser 102, the liquid tank 103, and the evaporator 104 may be known ones and their structures are not described.

The expansion apparatus 1 according to the invention basically includes a main body 2 and a refrigerant flow rate adjustment mechanism 20, as illustrated in Fig. 1.

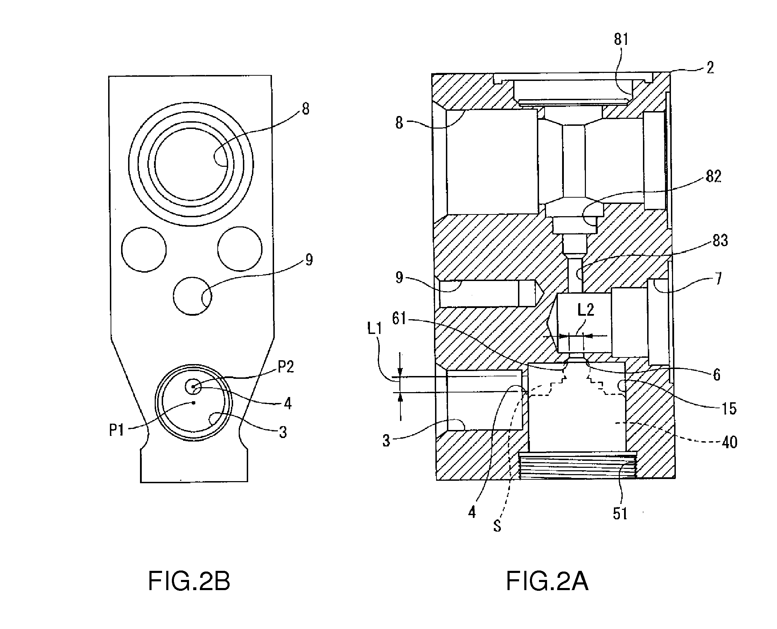

As illustrated in Figs. 1 and 2, the main body 2 is block-shaped and has a flow-in passage toward the evaporator 104 and a flow-out passage toward the compressor 101 therein. The flow-in passage includes a lead-in passage 3, a first narrow portion 4, a valve chest 5, a second narrow portion 6, and a lead-out passage 7 and the flow-out passage including a return passage 8.

The lead-in passage 3 is a passage through which the liquid refrigerant separated by the tank 103 is led to the valve chest 5 and is connected to the liquid tank 103 through the pipe 108 as illustrated in Fig. 1. The valve chest 5 incorporates a closing device 40, which will be described later, included in the refrigerant flow rate adjustment mechanism 20 and has a mounting hole 51 communicating with a lower part of the main body 2 as illustrated in Figs. 1 and 2A so that the closing device 40 is detachably mounted in the valve chest 5 from the lower part of the main body 2.

The first narrow portion 4 is a small-diameter passage provided between the lead-in passage 3 and the valve chest 5 and, when the refrigerant passes through the first narrow portion 4, eliminates or breaks up bubbles in the refrigerant. An inner diameter L1 of the first narrow portion 4 illustrated in Fig. 2A is, for example, 3.0 mm in this embodiment. The position in the valve chest 5 faced by the first narrow portion 4 will be described later.

The second narrow portion 6 is a small-diameter passage provided between the valve chest 5 and the lead-out passage 7 and has a flow passage area smaller than that of the first narrow portion 4 and the refrigerant is decompressed and expanded when passing through the second narrow portion 6. An inner diameter L2 of the second narrow portion 6 illustrated in Fig. 2A is, for example, 2.6 mm in this embodiment. A valve seat 61 on which a valve body 41 of the closing device 40, which will be described later, can be placed is formed upstream of the second narrow portion 6. The second narrow portion 6 is opened and closed by an opening device 30 and the closing device 40, which will be described later, constituting the refrigerant flow rate adjustment mechanism 20. The lead-out passage 7 feeds the refrigerant decompressed and expanded by the second narrow portion 6 toward the evaporator 104 and is connected to the evaporator 104 via, for example, the pipe 109 as illustrated in Fig. 1.

The return passage 8 is a communication passage through which the refrigerant having exchanged heat with air flowing through an air duct (not illustrated) in the evaporator 104 and cooled the air is returned to the compressor 101. In the return passage 8, a mounting hole 81 communicating with the return passage 8 is formed above the main body 2 as illustrated in Figs. 1 and 2A to mount the opening device 30 of the refrigerant flow rate adjustment mechanism 20 to the main body 2 from the side opposite to the mounting hole 51.

As illustrated in Fig. 2A, a large diameter hole 82 is formed on an opposite side to the mounting hole 81 of the return passage 8 and a through hole 83 extending from the large diameter hole 82 toward the lead-out passage 7 is formed. The opening of the large diameter hole 82 opened for the inner peripheral surface of the return passage 8 has a diameter larger than the inner diameter of the through hole 83 and larger than the outer diameter of a temperature sensing bar 36 of the opening device 30, which will be described later. The through hole 83 is formed concentrically with the second narrow portion 6 and passes from the large diameter hole 82 to the lead-out passage 7.

A hole 9 opened on the same side as the lead-in passage 3 is a screw hole for connecting the pipes 105 and 108 to the lead-in passage 3 and the return passage 8.

The refrigerant flow rate adjustment mechanism 20 includes the opening device 30 and the closing device 40 as illustrated in Fig. 1. An example of the opening device 30 will be described below with reference to Fig. 1. The opening device 30 includes a diaphragm operation part 31 in which a working fluid enclosing chamber 32 enclosing a working fluid is separated from a stopper housing chamber 34 having a stopper 33 by a diaphragm 35. The diaphragm operation part 31 is secured to the mounting hole 81 of the main body 2 by screwing or the like.

One end of the temperature sensing bar 36 is connected to the stopper 33 of the diaphragm operation part 31 so that the displacement of the diaphragm 35 can be transferred to the temperature sensing bar 36. The temperature sensing bar 36 is a cylindrical bar, made of a highly conductive material, that traverses the return passage 8 in its diameter direction by extending from the part close to the diaphragm operation part 31 toward the large diameter hole 82. The end of the temperature sensing bar 36 opposite to the stopper 33 is inserted into the large diameter hole 82.

An operation bar 37 is provided in the part of the temperature sensing bar 36 close to the lead-out passage 7. The operation bar 37 extends in the axial direction of the temperature sensing bar 36 and is slidably inserted into the through hole 83. The tip in the extending direction of operation bar 37 reaches the inside of the second narrow portion 6 through the lead-out passage 7 and abuts against the valve body 41 of the closing device 40, which will be described later.

Accordingly, the temperature of the refrigerant passing through the return passage 8 is transferred from the temperature sensing bar 36 to the working fluid enclosed in the working fluid enclosing chamber 32, the working fluid expands or contracts depending on the temperature of the refrigerant, the diaphragm 35 and the tip in the extending direction of the operation bar 37 displace toward the valve chest 5 when the working fluid expands, thereby enabling the valve body 41, which will be described below, to be biased in a direction in which the second narrow portion 6 is opened.

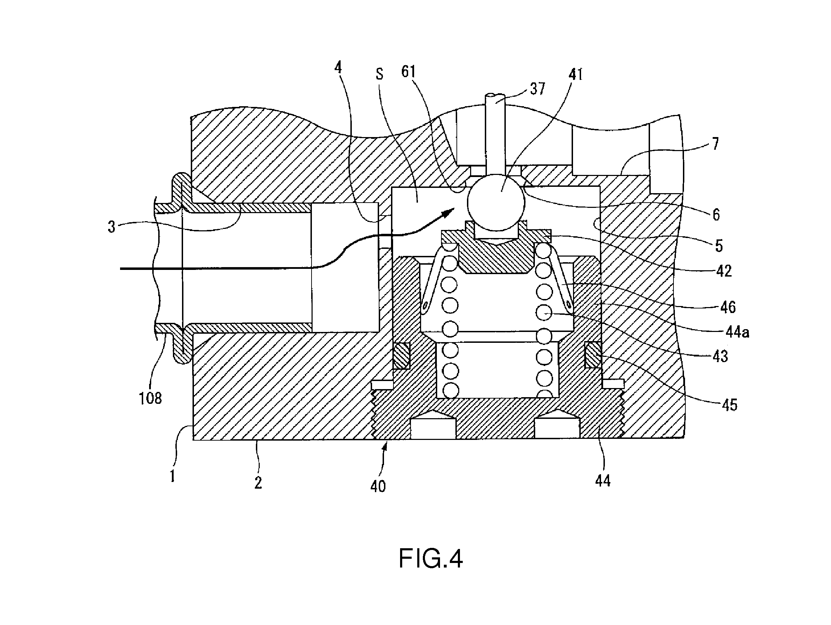

As illustrated in Figs. 1 and 4, the closing device 40 includes the valve body 41, a valve body support member 42, a coil spring 43, which is an elastic member, a holder 44 accommodating the coil spring 43, and an O-ring 45 for press-inserting the holder 44 into the mounting hole 51. The valve body 41 is spherical-shaped and coupled to the valve body support member 42 so as to move together with the valve body support member 42. The coil spring 43 always biases the valve body support member 42 and the valve body 41 in a direction in which the valve body 41 closes the second narrow portion 6. The cover part of the coil spring 43 including a spring cover 46 and the holder 44 will be described later.

In the expansion apparatus 1 having such a structure, the liquid refrigerant obtained by being compressed by the compressor 101, condensed by the condenser 102, and then separated into gas and liquid in the liquid tank 103 passes through the first narrow portion 4 from the lead-in passage 3 and is led to the valve chest 5. If the temperature of the refrigerant flowing through the return passage 8 is high because the temperature at a refrigerant outlet of the evaporator 104 is high, then the diaphragm 35 and the tip in the extending direction of the operation bar 37 displace toward the valve chest 5 (downward in Fig. 1) and the opening of the valve body 41 is enlarged by biasing force of the opening device 30, thereby increasing the flowrate of the refrigerant passing through the second narrow portion 6. In contrast, if the temperature of the refrigerant flowing through the return passage 8 is low because the temperature at the refrigerant outlet of the evaporator 104 is low, then the diaphragm 35 and the tip in the extending direction of the operation bar 37 displace away from the valve chest 5 (upward in Fig. 1) and the opening of the valve body 41 is reduced by biasing force of the closing device 40, thereby reducing the flowrate of the refrigerant passing through the second narrow portion 6. As described above, the refrigerant is adjusted in the flow rate of the refrigerant flowing through the second narrow portion 6 based on the operation of the refrigerant flow rate adjustment mechanism 20, decompressed and expanded when passing though the second narrow portion 6, and flows from the lead-out passage 7 toward the evaporator 104.

In the expansion apparatus 1 according to invention, as illustrated in Figs. 1 and 4, a space S is provided around the valve body 41 of the valve chest 5 and the opening of the first narrow portion 4 close to the valve chest 5 is formed so as to face the space S around the valve body.

In the embodiment, a center P2 of the first narrow portion 4 is displaced toward the second narrow portion 6 relative to a center P1 of the lead-in passage 3 as illustrated in Fig. 2B so that the opening of the first narrow portion 4 close to the valve chest 5 faces the space S around the valve body. On the other hand, the opening range of the first narrow portion 4 falls within the opening range (with the range obtained by projecting the inner diameter of the pipe 108 onto the valve chest 5) of the pipe 108 attached to the lead-in passage 3 as illustrated in Figs. 2A and 4 so that the refrigerant smoothly flows from the pipe 108 to the first narrow portion 4 through the lead-in passage 3.

Accordingly, as indicated by the arrow in Fig. 4, the refrigerant led from the pipe 108 to the lead-in passage 3 passes though the first narrow portion 4 and then flows toward the second narrow portion 6 via the space S around the valve body of the valve chest 5. That is, the refrigerant can flow to the inlet of the second narrow portion 6 without passing through the coil spring 43. Accordingly, since the refrigerant does not pass through the coil spring 43, in the refrigerant for which bubbles are eliminated or broken up when passing through the first narrow portion 4, it is possible to prevent new bubbles from being generated or broken bubbles from growing due to a turbulent flow caused when the refrigerant passes through the coil spring 43. Therefore, in the expansion apparatus 1 according to the invention, refrigerant flow noise caused when the refrigerant passes through the second narrow portion 6 is reduced.

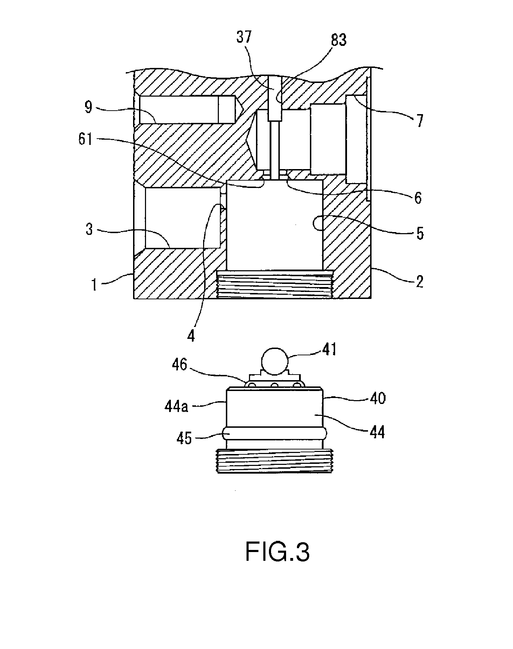

In addition, in the closing device 40, as illustrated in Figs. 1 and 4, a cover part covering the periphery of the coil spring 43 is formed by a side wall portion 44a of the holder 44 and the spring cover 46. The spring cover 46 has a substantially conical shape with a cross section getting smaller toward the valve body 41. The side wall portion 44a of the holder 44 extends cylindrically from the part close to the mounting hole 51 toward the valve body 41 side so as to cover the coil spring 43 and the lower end of the spring cover 46. In the embodiment, the outer shape of the holder 44 has substantially the same size from the part away from the valve body 41 to the portion close to the valve body 41 except for the portion to which the O-ring 45 is attached, as illustrated in Fig. 3.

Accordingly, even when a part of the refrigerant led to the valve chest 5 from the first narrow portion 4 flows toward the coil spring 43, since the coil spring 43 is covered with the cover part including the side wall portion 44a of the holder 44 and the spring cover 46, the refrigerant is prevented from passing through the coil spring 43. Therefore, in the refrigerant for which bubbles are eliminated or broken up when passing through the first narrow portion 4, it is possible to reliably prevent new bubbles from being generated or broken bubbles from growing due to a turbulent flow caused when the refrigerant passes through the coil spring 43. Therefore, in the expansion apparatus 1 according to the invention, refrigerant flow noise caused when the refrigerant passes through the second narrow portion 6 is further reduced.

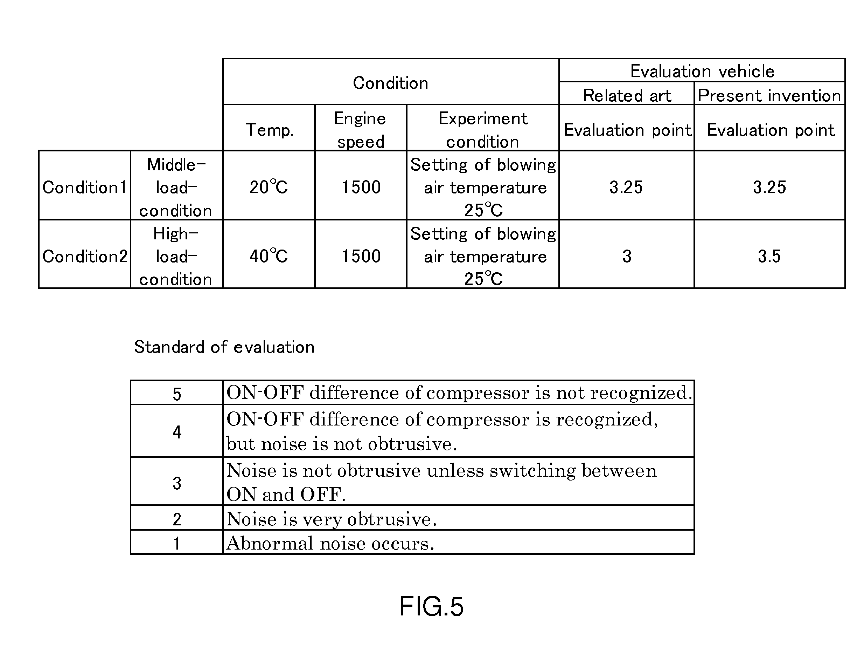

As described below with reference to Fig. 5, the expansion apparatus 1 according to the invention illustrated in Fig. 1 can further reduce refrigerant flow noise caused when the refrigerant passes through the second narrow portion (reference numerals 6 in Fig. 1 and reference numeral 203 in Fig. 7) as compared with the expansion apparatus 200 in the related art illustrated in Fig. 7.

The auditory evaluation experiment illustrated in Fig. 5 was performed in the high and low temperature anechoic room of Valeo Japan Co., Ltd. using an evaluation vehicle incorporating a vehicle air conditioner having the refrigerant cycle 100 under the following two conditions. The results are indicated on a scale from 1 to 5 (a better state has a higher point) as the evaluation point. That is, when the ON-OFF difference (the difference between the case in which the compressor 101 starts up and the refrigerant flows through the refrigerant cycle 100 and the case in which the compressor 101 stops and the refrigerant does not flow) of the compressor 101 is not recognized, the point is 5. When the ON-OFF difference of the compressor 101 is recognized, but the noise is not obtrusive, the point is 4. When the ON-OFF difference of the compressor 101 is obtrusive, but the noise is not obtrusive unless switching between ON and OFF is performed (when the noise is not obtrusive when the compressor 101 is kept ON), the point is 3. In addition, when the noise is very obtrusive when the compressor 101 is kept ON, the point is 2. When abnormal noise occurs if the compressor 101 is ON, the point is 1.

In the auditory evaluation experiment under condition 1, to meet a middle-load condition, the outside air temperature was set to "20ºC", the engine speed was set to "1500 rpm", the air conditioning apparatus was set to "setting of blowing air temperature 25 ºC", and the evaluation experiment was started with the room temperature of the evaluation vehicle kept at approximately 20ºC. To achieve "the setting of blowing air temperature 25ºC", the air conditioning apparatus was operated under the condition in which outside air at 20ºC is cooled by the evaporator, heated at 25ºC again by a heater, and blown into the vehicle room. As a result, under middle-load condition 1, the evaluation point was 3.25 in both the present invention and the related art as illustrated in the upper part in Fig. 5 and there is no difference in the evaluation point.

In the auditory evaluation experiment under condition 2, to meet a high-load condition, the outside air temperature was set to "40ºC", the engine speed was set to "1500 rpm", and the air conditioning apparatus was set to "setting of blowing air temperature 25ºC" and the evaluation experiment was started. The air conditioning apparatus was operated under the condition in which outside air at 40ºC is cooled by the evaporator, heated at 25ºC again by a heater, and blown into the vehicle room to achieve "the setting of blowing air temperature 25ºC". Since the outside air temperature is higher than in condition 1 by 20ºC, the radiation performance of the condenser 102 becomes lower and the refrigerant does not easily condense. In addition, the amount of heat absorbed in the evaporator 104 increases and the temperature of the refrigerant flowing through the return flow passage 8 rises, the opening mechanism 30 biases the valve body 41 in a direction in which the second narrow portion 6 is opened, and the flow rate of the refrigerant increases. As described above, condition 2 is severer than condition 1 because bubbles passing through the second narrow portion 6 are generated more easily and the number of bubbles passing through the second narrow portion 6 is larger. As a result of the evaluation, as indicated in the lower part in Fig. 5, the evaluation point in the invention is 3.5 while the evaluation point in the related art is 3, so the evaluation point in the invention is higher.

As described above, in the expansion apparatus 1 according to the invention illustrated in Fig. 1, the results of the auditory evaluation experiment in Fig. 5 indicate that reduction effects of refrigerant flow noise caused when the refrigerant passes through the second narrow portion (reference numeral 6 in Fig. 1 or reference numeral 203 in Fig. 7) are larger than in the expansion apparatus 200 in the related art illustrated in Fig. 7 under high load conditions.

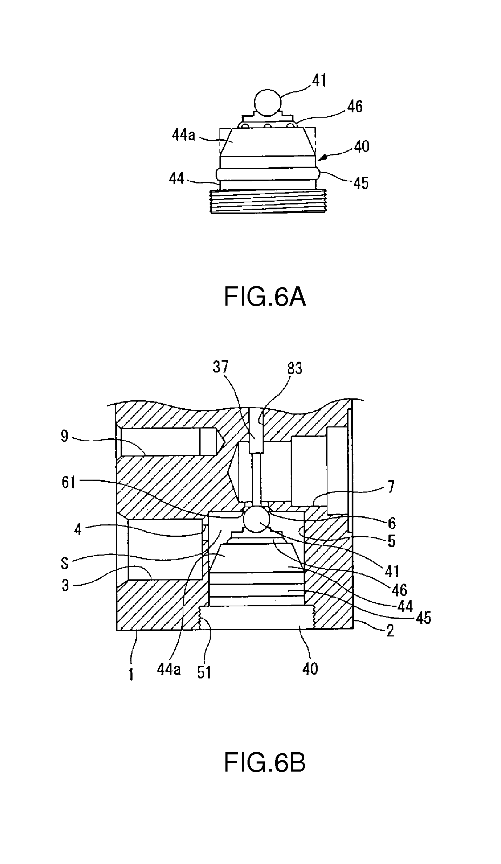

Although the outer shape of the holder 44 of the closing device 40 has substantially the same size from the part away from the valve body 41 to the portion close to the valve body 41 except for the portion to which the O-ring 45 is attached in the description of Fig. 3, the invention is not limited to the outer shape illustrated in Fig. 3. As illustrated in Fig. 6, the outer shape of the holder 44 of the closing device 40 may become smaller toward the valve body 41.

Accordingly, since the outer shape of the holder 44 becomes smaller toward the valve body 41, the space of the valve chest 5 becomes larger toward the valve body 41 and the refrigerant led to the valve chest 5 is guided so as to flow toward the valve body 41. Accordingly, in the expansion apparatus 1 including the closing device 40 in Fig. 6, it is possible to reduce the ratio of the refrigerant flowing toward the coil spring 43 to the refrigerant led to the valve chest 5, further reducing refrigerant flow noise caused when the refrigerant passes through the second narrow portion 6.

### [Reference Signs List]

- 1:: expansion apparatus
- 2:: main body
- 3:: lead-in passage
- 4:: the first narrow portion
- 5:: valve chest
- 6:: the second narrow portion
- 7:: lead-out passage
- 20:: refrigerant flow rate adjustment mechanism
- 30:: opening device
- 40:: closing device
- 41:: valve body
- 43:: coil spring
- 44:: holder
- 44a:: side wall portion
- 46:: spring cover
- 100:: refrigerant cycle
- 101:: compressor
- 102:: condenser
- 103:: liquid tank
- 104:: evaporator
- 105 to 110:: pipe
- S:: Space around valve body

## Claims

1. An expansion apparatus (1) comprising:
a main body including
a valve chest (5) to which a refrigerant is led,
a lead-in passage (3) through which the refrigerant is led to the valve chest,
a lead-out passage (7) through which the refrigerant led to the valve chest is led out,
a first narrow portion (4) formed between the lead-in passage and the valve chest, and
a second narrow portion (6) formed between the valve chest and the lead-out passage, the second narrow portion having a flow passage area smaller than that of the first narrow portion; and
a refrigerant flow rate adjustment mechanism (20) including
a valve body (41) disposed in the valve chest,
a closing device (40) biasing the valve body disposed in the valve chest in a direction in which the second narrow portion is closed, and
an opening device (30) capable of biasing the valve body in a direction in which the second narrow portion is opened,
wherein the valve chest (5) has a space (S) around the valve body and
the first narrow portion (4) is formed so as to face the space (S) around the valve body.

2. The expansion apparatus (1) according to claim 1,
wherein the first narrow portion (4) is formed so that the refrigerant flows toward the valve body.

3. The expansion apparatus (1) according to claim 1 or 2,
wherein the closing device (40) includes an elastic member biasing the valve body and a cover part covering a periphery of a side of the elastic member.

4. The expansion apparatus (1) according to claim 3,
wherein an outer shape of the cover part becomes smaller toward the valve body (41).

5. A refrigerant cycle (100) of a vehicle air conditioner, comprising:
a compressor (101) compressing a refrigerant;
a condenser (102) condensing the refrigerant compressed by the compressor;
the expansion apparatus (1) according to any one of claims 1 to 4 expanding the refrigerant condensed by the condenser;
and an evaporator (104) evaporating the refrigerant expanded by the expansion apparatus
wherein the compressor, the condenser, the expansion apparatus, and the evaporator are connected by piping.
